# EUROPEAN PATENT SPECIFICATION

(11) **EP 4 498 477 B1**
(45) Date of publication and mention of the grant of the patent: **03.06.2026**
(21) Application number: 24189819.6
(22) Date of filing: 19.07.2024
(51) Int. Cl.: H01M 10/42, H01M 10/44, H01M 10/48, B60L 3/00, B60L 3/04, B60L 58/25

(54) **PROTECTION METHOD FOR BATTERY PACK, AND PROTECTION DEVICE AND BATTERY PACK PERFORMING THE SAME**
SCHUTZVERFAHREN FÜR BATTERIEPACK SOWIE SCHUTZVORRICHTUNG UND BATTERIEPACK DAMIT
PROCÉDÉ DE PROTECTION POUR BLOC-BATTERIE, ET DISPOSITIF DE PROTECTION ET BLOC-BATTERIE L'EXÉCUTANT

(30) Priority: 27.07.2023 KR 20230098390
(43) Date of publication of application: 29.01.2025
(73) Proprietor: SAMSUNG SDI CO., LTD., Giheung-gu Yongin-si, Gyeonggi-do 17084 (KR)
(72) Inventor: Park, Jong Sam, 17084 Yongin-si, Gyeonggi-do (KR); Kim, Hyomin, 17084 Yongin-si, Gyeonggi-do (KR)
(74) Representative: Gulde & Partner

(56) References cited:
- EP-B1- 2 562 894
- EP-B1- 2 991 855
- US-A1- 2012 025 762

## Description

### BACKGROUND

### 1. Field

The present disclosure relates to a protection method for a battery pack, and a protection device and a battery pack that perform the same.

### 2. Description of the Related Art

A secondary battery that may be repeatedly charged and discharged differs from a primary battery that provides only irreversible conversion of chemical energy to electrical energy. A low-capacity secondary battery is used as a power supply for a small electronic device such as a mobile phone, a laptop computer, or a camcorder, and a high-capacity secondary battery is used as a power supply for a hybrid vehicle or the like.

In general, a secondary battery cell includes an electrode assembly including a positive electrode, a negative electrode, and a separator interposed between the positive electrode and the negative electrode, a case accommodating the electrode assembly, and an electrode terminal electrically connected to the electrode assembly. An electrolyte solution is injected into the case to enable charging and discharging of the battery cell through an electrochemical reaction between the positive electrode, the negative electrode, and the electrolyte solution. A shape of the case such as a cylindrical or rectangular shape varies depending on a use of the battery cell.

Battery cells may be connected in series and/or in parallel to form a battery module with high energy density. A battery pack may include one or more of battery modules according to a required specification.

In the battery pack, an overheating phenomenon in which the battery cell is overheated may occur due to a short circuit, a disconnection, an overcurrent, an overvoltage, a high temperature environment, or the like.

A protection circuit protects the battery pack by performing a protection action such as stopping charging and discharging or the like if a temperature value of the battery cell is higher than a predetermined temperature limit value. Typically, the temperature limit value is set in advance when the battery pack is released, and battery packs with the same specification are set to have the same temperature limit value.

Even after the protection operation is performed, a phenomenon in which a temperature of the battery cell continues to rise for a predetermined period of time due to residual heat, occurs.

The residual heat after the protection operation is performed in the battery pack varies depending on an output of the battery pack at a time when the protection operation is performed. A degree of temperature rise of the battery cell after the protection operation may vary depending on the output of the battery pack at the time when the protection operation is performed.

If the battery pack is mounted on an electronic device (e.g., a cleaner) whose output is adjusted in multiple stages, the output of the battery pack varies depending on an output of the mounted electronic device. If the battery pack is used in common, the output of the battery pack varies depending on the output of the electronic device on which the battery pack is mounted. However, an existing protection circuit performs a protection operation using a fixed temperature limit value so that there is a problem in which it is difficult to appropriately respond if the output of the battery pack changes.

EP 2 991 855 B1 relates to a method for managing the temperature of a battery of an electric or hybrid vehicle.

### SUMMARY

Embodiments are directed to, in a first aspect, a protection device for a battery pack including a battery module, including: a temperature sensor that is configured to measure a temperature of the battery module; and a control device (i.e., a controller) that is configured to perform a protection operation that blocks charging and discharging of the battery module of the battery pack if a first temperature value measured through the temperature sensor during a use of the battery module is greater than a first temperature limit value and to correct the first temperature limit value according to a second temperature value measured through the temperature sensor after the protection operation is performed. If the second temperature value is greater than a maximum allowable temperature value, the controller is further configured to correct the first temperature limit value to be reduced by a predetermined value. If the second temperature value is less than or equal to a maximum allowable temperature value, the controller is further configured to maintain the first temperature limit value.

The protection device may further include a storage device that may be configured to store at least one temperature limit value corresponding to at least one output value of the battery pack. The controller may be further configured to select the first temperature limit value according to the output value of the battery pack. If the battery pack outputs a first output value and the temperature limit value corresponding to the first output value is already stored in the storage device, the controller may be further configured to use the temperature limit value corresponding to the first output value as the first temperature limit value. If the battery pack outputs a second output value that is different from the first output value and the temperature limit value corresponding to the second output value is already stored in the storage device, the controller may be further configured to use the temperature limit value corresponding to the second output value as the first temperature limit value. If the battery pack outputs a third output value and the temperature limit value corresponding to the third output value is not stored in the storage device, the controller may be further configured to use a predetermined default value as the first temperature limit value.

If the second temperature value is greater than a maximum allowable temperature value, the controller is further configured to correct the first temperature limit value to be reduced by a predetermined value.

If the second temperature value is less than or equal to a maximum allowable temperature value, the controller is further configured to maintain the first temperature limit value.

If the protection operation is performed while the battery pack discharges to output a first output value and a temperature limit value corresponding to the first output value is not stored in the storage device, the controller may be further configured to store the first temperature limit value in the storage device as the temperature limit value corresponding to the first output value.

Embodiments are directed to, in a second aspect, a battery pack including: a battery module; and a protection device for the battery pack including a battery module. The protection device includes: a temperature sensor that is configured to measure a temperature of the battery module; and a controller that is configured to perform a protection operation that blocks charging and discharging of the battery module of the battery pack if a first temperature value measured through the temperature sensor during a use of the battery module is greater than a first temperature limit value and to correct the first temperature limit value according to a second temperature value measured through the temperature sensor after the protection operation is performed. The correcting of the first temperature limit value includes correcting the first temperature limit value to be reduced by a predetermined value if the second temperature value is greater than a maximum allowable temperature value, and maintaining the first temperature limit value if the second temperature value is less than or equal to a maximum allowable temperature value.

Embodiments are directed to, in a third aspect, a protection method for a battery pack, that includes: measuring a first temperature value of a battery module included in the battery pack while the battery pack discharges; performing a protection operation that blocks charging and discharging of the battery module of the battery pack if the first temperature value is greater than a first temperature limit value; measuring a second temperature value of the battery module after the protection operation is performed; and correcting the first temperature limit value according to the second temperature value.

The protection method may further include selecting the first temperature limit value according to an output value of the battery pack. The selecting of the first temperature limit value may include selecting an already stored temperature limit value corresponding to a first output value as the first temperature limit value if the battery pack outputs the first output value and a temperature limit value corresponding to the first output value is already stored. The selecting of the first temperature limit value may include selecting an already stored temperature limit value corresponding to a second output value as the first temperature limit value if the battery pack outputs the second output value different from the first output value and a temperature limit value corresponding to the second output value is already stored. The selecting of the first temperature limit value may include selecting a default value as the first temperature limit value if the battery pack outputs a third output value and a temperature limit value corresponding to the third output value is not stored.

The correcting of the first temperature limit value includes correcting the first temperature limit value to be reduced by a predetermined value if the second temperature value is greater than a maximum allowable temperature value.

The correcting of the first temperature limit value includes maintaining the first temperature limit value if the second temperature value is less than or equal to a maximum allowable temperature value.

The protection method may further include registering the first temperature limit value as a temperature limit value corresponding to a first output value if the protection operation is performed while the battery pack discharges to the first output value and the temperature limit value corresponding to the first output value is not registered.

### BRIEF DESCRIPTION OF THE DRAWINGS

Features will become apparent to those of skill in the art by describing in detail exemplary embodiments with reference to the attached drawings in which:
FIG. 1 schematically shows a battery pack according to one or more embodiments.
FIG. 2 is a flow diagram for a protection method of the battery pack according to one or more embodiments.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey exemplary implementations to those skilled in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. Further, it will be understood that when a layer is referred to as being "under" another layer, it can be directly under, and one or more intervening layers may also be present. In addition, it will also be understood that when a layer is referred to as being "between" two layers, it can be the only layer between the two layers, or one or more intervening layers may also be present. Like reference numerals refer to like elements throughout.

Embodiments of the present disclosure will now be described in detail with accompanying drawings. Operation effects of the embodiments of the present disclosure, and a realization method thereof will now be described with accompanying drawings. In the drawings, the same reference numerals indicate the same constituent elements, and no repeated descriptions thereof will be provided. As those skilled in the art would realize, the described embodiments may be modified in various different ways, all without departing from the scope of the present disclosure. The embodiments are provided as examples so that the present disclosure may be thorough and complete, and will sufficiently supply aspects and characteristics of the present disclosure to a person skilled in the art.

Hence, for the purpose of complete understanding on the aspects and the characteristics of the present disclosure, processes, factors, and skills that may not be needed by a person of ordinary skill in the art may not be described. In the drawings, relative sizes of elements, layers, and regions may be exaggerated for clarity.

In the present specification, the term "and/or" includes any and all combinations of the associated listed items. When the embodiments of the present disclosure are described, the use of "can" or "may" signifies at least one embodiment of the present disclosure. In the following description of the embodiments of the present disclosure, a singular term may include a plural form unless stated in another way.

In the present specification, terms including ordinal numbers such as first, second, and third will be used only to describe various constituent elements, and are not to be interpreted as limiting these constituent elements. The terms are only used to differentiate one constituent element from other constituent elements. For example, a first constituent element could be termed a second constituent element, and similarly, a second constituent element could be termed a first constituent element, without departing from the scope of the present disclosure. An expression such as "at least one" precedes a list of constituent elements to modify an entire list of constituent elements and not to modify an individual constituent element of the list.

In the present specification, the terms "substantially," "about," and similar terms are used as terms of approximation and not as terms of degree, and are intended to account for the inherent variations in measured or calculated values that would be recognized by those of ordinary skill in the art. Further, if the term "substantially" is used in combination with a feature that could be expressed using a numeric value, the term "substantially" denotes a range of +/- 5% of the value centered on the value.

It will be understood that when a constituent element or layer is referred to as being "on," "connected to," or "coupled to" another constituent element or layer, it may be directly on, connected to, or coupled to the other constituent element or layer, or one or more intervening constituent elements or layers may be present. It will also be understood that when a constituent element or layer is referred to as being "between" two constituent elements or layers, it may be the only constituent element or layer between the two constituent elements or layers, or one or more intervening constituent elements or layers may also be present.

Electrically connecting two constituent elements may include directly connecting two constituent elements, and connecting the same with another constituent element therebetween. The other constituent element may include a switch, a resistor, a capacitor, or the like. When the embodiments are described, an expression of connection signifies electrical connection when an expression of direct connection is not provided.

Hereinafter, a protection device according to embodiments and a battery pack including the same will be described in detail with reference to necessary drawings.

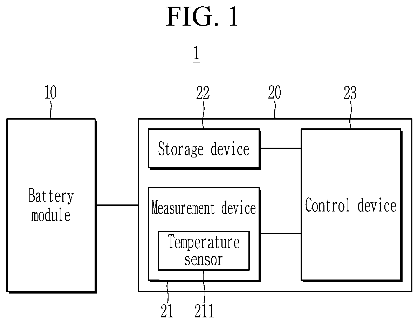

FIG. 1 schematically shows the battery pack according to an embodiment.

Referring to FIG. 1, the battery pack 1 may include, for example, a battery module 10 and the protection device 20.

The battery module 10 may include a plurality of battery cells connected in series and/or in parallel between pack terminals.

The protection device 20 may include, for example, a measurement device 21, a storage device 22, and a control device 23.

The measurement device 21 may measure a state (e.g., a voltage, a current, a temperature, or the like) of the battery module 10. For example, the measurement device 21 may include a temperature sensor 211 for measuring a temperature of the battery module 10.

The storage device 22 may include at least one memory, and may store various information, data, and the like processed by the protection device 20. The storage device 22 may temporarily store measurement data measured by the measurement device 21. The storage device 22 may store various protection values (e.g., a voltage limit value, a current limit value, a temperature limit value, and the like) that serve as a reference (or a reference value) for performing a protection function.

The storage device 22 may store the temperature limit value that varies according to an output of the battery pack 1. For example, the storage device 22 may divide the output of the battery pack 1 into a plurality of sections (or a plurality of values), and may store the temperature limit value corresponding to each section (or each value). Table 1 below shows an example of the temperature limit value stored in the storage device 22.

**Table 1**

| Battery pack output (W) | Temperature limit value (°C) |
|---|---|
| 2000 | 65 |
| 1800 | 67 |
| 1000 | 70 |

The storage device 22 may store temperature limit values in a table form as shown in Table 1. The storage device 22 may store a maximum allowable temperature value of the battery module 10. The maximum allowable temperature value may be different from the temperature limit value, and may be a reference value for evaluating a temperature increase of the battery module 10 due to residual heat after a protection operation. The temperature limit value may be an appropriate value so that the battery cell is not damaged even if the temperature of the battery cell rises due to the residual heat. A degree of temperature rise of the battery cell after the protection operation may vary depending on the output of the battery pack at the time when the protection operation is performed. The maximum allowable temperature value may be set to a value greater than the temperature limit value, and may be determined by a cell characteristic of the battery module 10.

The control device 23 may receive the measurement data (e.g., a voltage, a current, a temperature, and the like) from the measurement device 21, and may monitor the state of the battery module 10 based on the measurement data. The control device 23 may perform a cell balancing function, a charging and discharging control function, the protection function, and the like depending on the state of the battery module 10.

If a temperature value of the battery module 10 measured through the measurement device 21 during use (e.g., discharging) of the battery module 10 is higher than the temperature limit value, the control device 23 may perform a protection operation that blocks charging and discharging of the battery module 10. In this case, if there are a plurality of temperature limit values stored in the storage device 22, the control device 23 may, for example, select and use one of the plurality of temperature limit values according to a current output value (i.e., a discharging of electric power) of the battery pack 1. Taking Table 1 as an example, the control device 23 may perform the protection operation using a value of 70°C as the temperature limit value if the output of the battery pack 1 is less than or equal to 1000 W, the control device 23 may perform the protection operation using a value of 67°C as the temperature limit value if the output of the battery pack 1 is greater than 1000 W and less than or equal to 1800 W, and the control device 23 may perform the protection operation using a value of 65°C as the temperature limit value if the output of the battery pack 1 is greater than 1800 W and less than or equal to 2000 W.

The control device 23 may monitor a temperature value measured after the protection operation is performed and an output value of the battery pack 1 at a time when the protection operation is performed, and may update or add the temperature limit value based on the monitored values. The battery module 10 may maintain temperature rise for a predetermined period of time due to residual heat even after the protection operation is performed. The control device 23 may continuously detect the temperature of the battery module 10 to check how much the temperature of the battery module 10 rises after the protection operation is performed. The control device 23 may determine whether the temperature limit value is updated by comparing the temperature value measured after the protection operation is performed with a predetermined maximum allowable temperature value. The control device 23 may determine a maximum temperature value among temperature values detected after the protection operation is performed, and may compare the maximum temperature value with the predetermined maximum allowable temperature value to check whether the temperature value after the protection operation is higher than the maximum allowable temperature value. The control device 23 may continuously measure the temperature value of the battery module 10 after the protection operation is performed, and may compare the measured temperature value with the maximum allowable temperature value each time the temperature value is obtained to check whether the temperature value after the protection operation is higher than the maximum allowable temperature value. The control device 23 may measure the temperature value of the battery module 10 after a predetermined time from a time when the protection operation is performed, and may compare the measured temperature value with the maximum allowable temperature value to check whether the temperature value after the protection operation is higher than the maximum allowable temperature value.

If the temperature value of the battery module 10 measured after the protection operation is higher than the maximum allowable temperature value, the control device 23 may, for example, update the temperature limit value used when the protection operation is performed, e.g., lower the temperature limit value or otherwise correcting it, when the protection operation is performed by a predetermined value (e.g., 3°C). Then, the control device 23 may change the temperature limit value stored in the storage device 22 using the corrected temperature limit value. For example, if the temperature value of the battery module 10 detected after the protection operation is performed is 95°C, that value is higher than the maximum allowable temperature value of 85°C in a state where the output value of the battery pack 1 is 2000 W and the temperature limit value corresponding to 2000 W is set to 70°C, the control device 23 may correct the temperature limit value to be 67°C. Then, the control device 23 may update the temperature limit value stored in the storage device 22 corresponding to 2000 W to be 67°C.

If the temperature limit value corresponding to the current output value of the battery pack 1 is not stored in the storage device 22, the control device 23 may perform the protection operation using the temperature limit value set by default. For example, if the battery pack 1 operates with an output of 1800 W in a state where only the temperature limit value set based on an output of 2000 W is stored in the storage device 22, the control device 23 may perform the protection operation using 70°C that is a default value of the temperature limit value.

After the protection operation is performed using the default value of the temperature limit value, the control device 23 may add the temperature limit value corresponding to the output value of the battery pack 1 to the storage device 22 according to a result of comparing the temperature value of the battery module 10 after the protection operation is performed with the maximum allowable temperature value. If the temperature value of the battery module 10 detected after the protection operation is performed is greater than the maximum allowable temperature value, the control device 23 may correct the temperature limit value by lowering the temperature limit value used when the protection operation is performed by a predetermined value (e.g., lowering by about 3°C). Then, the control device 23 may map the corrected temperature limit value to the output value when the protection operation of the battery pack 1 is performed to additionally store (or register) the corrected temperature limit value in the storage device 22. If the temperature value of the battery module 10 detected after the protection operation is performed is less than or equal to the maximum allowable temperature value, the control device 23 may map the temperature limit value used when the protection operation is performed to the output value when the protection operation of the battery pack 1 is performed to additionally store the temperature limit value used when the protection operation is performed in the storage device 22. For example, if the temperature value of the battery module 10 detected after the protection operation is 89°C, that temperature value is higher than the maximum allowable temperature value of 85°C in a state where the output value of the battery pack 1 is 1800 W and the temperature limit value used when the protection operation is performed is the default value of 70°C, the control device 23 may correct the temperature limit value to be 67°C. Then, the control device 23 may map the corrected temperature limit value (67°C) to the output value of 1800 W to add the corrected temperature limit value (67°C) to the storage device 22. For example, if the temperature value of the battery module 10 detected after the protection operation is 83°C, that temperature value is lower than the maximum allowable temperature value of 85°C in a state where the output value of the battery pack 1 is 1000 W and the temperature limit value used when the protection operation is performed is the default value of 70°C, the control device 23 may map the temperature limit value (70°C) used when the protection operation is performed to the output value of 1000 W to add the temperature limit value (70°C) used when the protection operation is performed to the storage device 22.

The control device 23 may be implemented by a battery management system (BMS) of the battery pack 1, and may include at least one processor to perform the above-described functions.

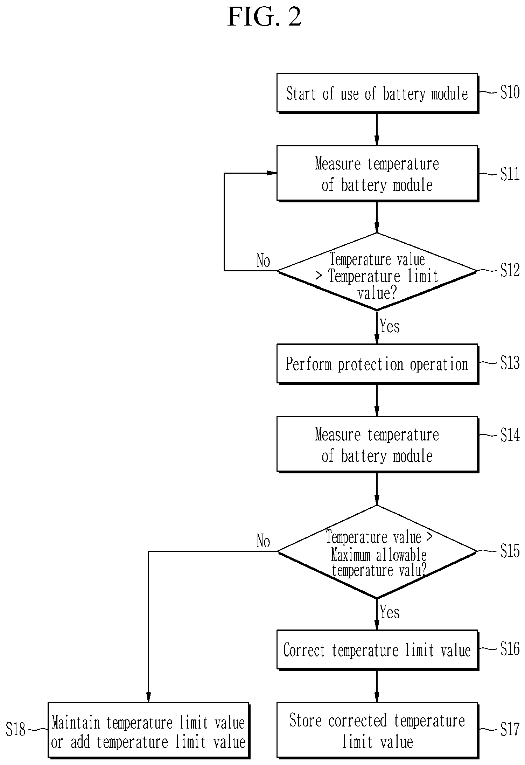

Hereinafter, referring to FIG. 2, a protection method of the battery pack 1 according to an embodiment is described in detail.

FIG. 2 is a flow diagram for one example of the protection method of the battery pack 1 according to the embodiment. The method of FIG. 2 may be performed by the control device 23 described with reference to FIG. 1.

Referring to FIG. 2, if a use of the battery module 10 begins (i.e., if discharging begins) (S10), the control device 23 may obtain the temperature value by continuously measuring the temperature of the battery module 10 through the temperature sensor 211 (S11). The control device 23 may compare the measured temperature value with the temperature limit value to check whether the temperature value is greater than the temperature limit value (S12).

In the step S12, the temperature limit value may be selected according to the current output value of the battery pack 1. If the temperature limit value corresponding to the current output value of the battery pack 1 is already stored in the storage device 22, the control device 23 may select the stored temperature limit value to compare the selected temperature limit value with the measured temperature value. If the temperature limit value corresponding to the current output value of the battery pack 1 is not yet stored in the storage device 22, the control device 23 may, for example, select the temperature limit value set by default to compare the selected temperature limit value with the measured temperature value.

If the measured temperature value is greater than the temperature limit value, the control device 23 may perform the protection operation (S13). That is, the control device 23 may block a current path between output terminals of the battery pack 1 and the battery module 10 to block charging and discharging of the battery pack 1.

The control device 23 may obtain the temperature value by continuously measuring the temperature of the battery module 10 through the measurement device 21 even after the protection operation is performed (S14). The control device 23 may compare the measured temperature value with a predetermined maximum allowable temperature value to check whether the temperature value of the battery module 10 measured after the protection operation is higher than the maximum allowable temperature value (S15).

In the step S15, the control device 23 may select a maximum temperature value among temperature values measured after the protection operation is performed, and may compare the selected temperature value with the maximum allowable temperature value to check whether the temperature value after the protection operation is higher than the maximum allowable temperature value. Every time the temperature value of the battery module 10 is obtained after the protection operation is performed, the control device 23 may, for example, compare the obtained temperature value with the maximum allowable temperature value to check whether the temperature value after the protection operation is higher than the maximum allowable temperature value. The control device 23 may measure the temperature value of the battery module 10 after a predetermined time from a time when the protection operation is performed, and may compare the measured temperature value with the maximum allowable temperature value to check whether the temperature value after the protection operation is higher than the maximum allowable temperature value.

If the temperature value of the battery module 10 measured after the protection operation is higher than the maximum allowable temperature value, the control device 23 may update the temperature limit value used when the protection operation is performed, e.g., lowering the temperature limit value or otherwise correcting it, by a predetermined value (S16). Then, the control device 23 may store the corrected temperature limit value in the storage device 22 (S17). In the step S17, if the corrected temperature limit value is stored, the control device 23 may store the corrected temperature limit value corresponding to the output value of the battery pack 1 at a time when the protection operation is performed. If the temperature limit value corresponding to the output value already exists, the control device 23 may change a previously stored temperature limit value to the temperature limit value corrected through the step S16 to store the changed temperature limit value. If the temperature limit value corresponding to the output value is not yet stored in the storage device 22, the control device 23 may map the output value to the temperature limit value corrected through the step S16 to additionally store (or register) the corrected temperature limit value in the storage device 22.

If the temperature value of the battery module 10 measured after the protection operation is less than or equal to the maximum allowable temperature value, the control device 23 may maintain a previously stored temperature limit value stored in the storage device 22 or may add a new temperature limit value to the storage device 22 (S18).

In the step S18, if the temperature limit value corresponding to the output value of the battery pack 1 at a time when the protection operation is performed is already stored in the storage device 22, the control device 23 may maintain an original value without changing the temperature limit value. If the temperature limit value corresponding to the output value of the battery pack 1 at the time when the protection operation is performed is not yet set, the control device 23 may map the temperature limit value (the default value) used in the step S12 to the output value of the battery pack 1 to additionally store the temperature limit value in the storage device 22.

According to the embodiment described above, through learning, the protection device 20 may correct the temperature limit value to suit the output value of the battery pack 1 or may add a new temperature limit value. Therefore, deterioration or damage of the battery pack 1 due to residual heat after the protection operation is performed may be minimized, and safety of the battery pack 1 may be improved and/or maximized.

Electronic or electrical devices according to embodiments of the present disclosure and/or other related devices or constituent elements may be realized by using appropriate hardware, firmware (e.g., an application-specific integrated circuit), software, or combinations of software, firmware, and hardware. For example, various configurations of the above-noted devices may be disposed on one or more integrated circuit (IC) chips or an individual IC chip. For example, where the devices are disposed on one IC, it may be, for example, a System-On-Chip or "SOC." In some embodiments, various configurations of the above-noted devices may be realized on a flexible printed circuit film, a tape carrier package (TCP), a printed circuit board (PCB), or one substrate. The electrical or mutual connections described in the present specification may, for example, be realized by the PCB, wires on different types of circuit carriers, or conductive elements. The conductive elements may, for example, include metallization such as surface metallizations and/or pins, and may include, for example, conductive polymers or ceramics.

In an example, the various configurations of the devices may be performed by at least one processor so as to perform the above-described various functions. One or more of these various configurations may be performed in at least one computing device, and they may be, for example, processes or threads for performing computer program instructions and interacting with other system constituent elements. The computer program instructions may be stored, for example, in a memory of a computing device using a standard memory device such as, for example, a random access memory (RAM) or other types of volatile or non-volatile memory. The computer program instruction may also be stored in a non-transitory computer readable medium such as, for example, a CD-ROM, a flash drive or other solid state storage device, a disk drive or the like.

Further, a person of ordinary skill in the art must understand that various functions of the computing device may be combined or united to a single computing device, or functions of a specific computing device may be dispersed to at least another computing device while not digressing from the range of the embodiments of the present disclosure.

A problem to be solved through the present disclosure is to provide a protection method of a battery pack that may provide an appropriate temperature protection function according to an output of a battery pack, and is to provide a protection device and a battery pack that perform the protection method of the battery pack.

A protection device for a battery pack including a battery module according to embodiments may include, for example: a temperature sensor that may be configured to measure a temperature of the battery module; and a control device that may be configured to perform a protection operation of the battery pack if a first temperature value measured through the temperature sensor during a use of the battery module is greater than a first temperature limit value and to correct the first temperature limit value according to a second temperature value measured through the temperature sensor after the protection operation is performed.

The protection device may further include a storage device that may be configured to store at least one temperature limit value corresponding to at least one output value of the battery pack.

The control device may select the first temperature limit value according to the output value of the battery pack.

If the battery pack outputs a first output value and the temperature limit value corresponding to the first output value is already stored in the storage device, the control device may use the temperature limit value corresponding to the first output value as the first temperature limit value.

If the battery pack outputs a second output value that is different from the first output value and the temperature limit value corresponding to the second output value is already stored in the storage device, the control device may use the temperature limit value corresponding to the second output value as the first temperature limit value.

If the battery pack outputs a third output value and the temperature limit value corresponding to the third output value is not stored in the storage device, the control device may use a predetermined default value as the first temperature limit value.

If the second temperature value is greater than a maximum allowable temperature value, the control device may correct the first temperature limit value to be reduced by a predetermined value.

If the second temperature value is less than or equal to a maximum allowable temperature value, the control device may maintain the first temperature limit value.

If the protection operation is performed while the battery pack discharges to a first output value and a temperature limit value corresponding to the first output value is not stored, the control device may register the first temperature limit value as the temperature limit value corresponding to the first output value.

A battery pack according to embodiments may include, for example: a battery module; and the protection device.

A protection method of the battery pack according to embodiments may include for example: measuring a first temperature value of a battery module included in the battery pack while the battery pack discharges; performing a protection operation of the battery pack if the first temperature value is greater than a first temperature limit value; measuring a second temperature value of the battery module after the protection operation is performed; and correcting the first temperature limit value according to the second temperature value.

The protection method may further include selecting the first temperature limit value according to an output value of the battery pack.

The selecting of the first temperature limit value may include selecting an already stored temperature limit value corresponding to a first output value as the first temperature limit value if the battery pack outputs the first output value and a temperature limit value corresponding to the first output value is already stored.

The selecting of the first temperature limit value may include selecting an already stored temperature limit value corresponding to a second output value as the first temperature limit value if the battery pack outputs the second output value different from the first output value and a temperature limit value corresponding to the second output value is already stored.

The selecting of the first temperature limit value may include selecting a default value as the first temperature limit value if the battery pack outputs a third output value and a temperature limit value corresponding to the third output value is not stored.

The correcting of the first temperature limit value may include correcting the first temperature limit value to be reduced by a predetermined value if the second temperature value is greater than a maximum allowable temperature value.

The correcting of the first temperature limit value may include maintaining the first temperature limit value if the second temperature value is less than or equal to a maximum allowable temperature value.

The protection method may further include registering the first temperature limit value as a temperature limit value corresponding to a first output value if the protection operation is performed while the battery pack discharges to the first output value and the temperature limit value corresponding to the first output value is not registered.

According to the present disclosure, even if an output of a battery pack changes, damage to the battery pack due to overheating may be prevented by performing a temperature protection operation according to the changed output.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the appended claims.

## Claims

1. A protection device (20) for a battery pack (1) including a battery module (10), the protection device (20) comprising:
a temperature sensor (211) configured to measure a temperature of the battery module (10); and
a controller configured to perform a protection operation that blocks charging and discharging of the battery module (10) of the battery pack (1) if a first temperature value measured through the temperature sensor (211) during a use of the battery module (10) is greater than a first temperature limit value and to correct the first temperature limit value according to a second temperature value measured through the temperature sensor (211) after the protection operation is performed;
**characterized in that**:
if the second temperature value is greater than a maximum allowable temperature value, the controller is further configured to correct the first temperature limit value to be reduced by a predetermined value, and
if the second temperature value is less than or equal to a maximum allowable temperature value, the controller is further configured to maintain the first temperature limit value.

2. The protection device (20) as claimed in claim 1, further comprising a storage device (22) configured to store at least one temperature limit value corresponding to at least one output value of the battery pack (1).

3. The protection device (20) as claimed in claim 2, wherein the controller is further configured to select the first temperature limit value according to the output value of the battery pack (1).

4. The protection device (20) as claimed in claim 3, wherein if the battery pack (1) outputs a first output value and the temperature limit value corresponding to the first output value is already stored in the storage device (22), the controller is further configured to use the temperature limit value corresponding to the first output value as the first temperature limit value.

5. The protection device (20) as claimed in claim 4, wherein:
if the battery pack (1) outputs a second output value that is different from the first output value and the temperature limit value corresponding to the second output value is already stored in the storage device (22), the controller is further configured to use the temperature limit value corresponding to the second output value as the first temperature limit value; and/or
if the battery pack (1) outputs a third output value and the temperature limit value corresponding to the third output value is not stored in the storage device (22), the controller is further configured to use a predetermined default value as the first temperature limit value.

6. The protection device (20) as claimed in any one of claims 2 to 5, wherein if the protection operation is performed while the battery pack (1) discharges to output a first output value and a temperature limit value corresponding to the first output value is not stored in the storage device (22), the controller is further configured to store the first temperature limit value in the storage device (22) as the temperature limit value corresponding to the first output value.

7. A battery pack (1) comprising:
a battery module (10); and
a protection device (20) according to any one of the preceding claims.

8. A protection method for a battery pack (1), the method comprising:
measuring a first temperature value of a battery module (10) included in the battery pack (1) while the battery pack (1) discharges;
performing a protection operation that blocks charging and discharging of the battery module (10) of the battery pack (1) if the first temperature value is greater than a first temperature limit value;
measuring a second temperature value of the battery module (10) after the protection operation is performed; and
correcting the first temperature limit value according to the second temperature value,
wherein the correcting of the first temperature limit value includes:
correcting the first temperature limit value to be reduced by a predetermined value if the second temperature value is greater than a maximum allowable temperature value, and
maintaining the first temperature limit value if the second temperature value is less than or equal to a maximum allowable temperature value.

9. The protection method as claimed in claim 8, further comprising selecting the first temperature limit value according to an output value of the battery pack (1).

10. The protection method as claimed in claim 9, wherein the selecting of the first temperature limit value includes selecting an already stored temperature limit value corresponding to a first output value as the first temperature limit value if the battery pack (1) outputs the first output value and a temperature limit value corresponding to the first output value is already stored.

11. The protection method as claimed in claim 10, wherein:
the selecting of the first temperature limit value includes selecting an already stored temperature limit value corresponding to a second output value as the first temperature limit value if the battery pack (1) outputs the second output value different from the first output value and a temperature limit value corresponding to the second output value is already stored; and/or
the selecting of the first temperature limit value includes selecting a default value as the first temperature limit value if the battery pack (1) outputs a third output value and a temperature limit value corresponding to the third output value is not stored.

12. The protection method as claimed in any one of claims 8 to 11, further comprising registering the first temperature limit value as a temperature limit value corresponding to a first output value if the protection operation is performed while the battery pack (1) discharges to output the first output value and the temperature limit value corresponding to the first output value is not registered.

## Patentansprüche

1. Schutzvorrichtung (20) für einen Batteriepack (1) mit einem Batteriemodul (10), wobei die Schutzvorrichtung (20) Folgendes umfasst:
einen Temperatursensor (211), der dazu konfiguriert ist, eine Temperatur des Batteriemoduls (10) zu messen; und
eine Steuerung, die dazu konfiguriert ist, einen Schutzvorgang durchzuführen, der das Laden und Entladen des Batteriemoduls (10) des Batteriepacks (1) blockiert, wenn ein während der Nutzung des Batteriemoduls (10) über den Temperatursensor (211) gemessener erster Temperaturwert größer als ein erster Temperaturgrenzwert ist, und den ersten Temperaturgrenzwert entsprechend einem zweiten Temperaturwert zu korrigieren, der über den Temperatursensor (211) gemessen wird, nachdem der Schutzvorgang durchgeführt wurde;
**dadurch gekennzeichnet, dass**:
wenn der zweite Temperaturwert größer als ein maximal zulässiger Temperaturwert ist, die Steuerung ferner dazu konfiguriert ist, den ersten Temperaturgrenzwert so zu korrigieren, dass er um einen vorbestimmten Wert verringert wird, und
wenn der zweite Temperaturwert kleiner oder gleich einem maximal zulässigen Temperaturwert ist, die Steuerung ferner dazu konfiguriert ist, den ersten Temperaturgrenzwert aufrechtzuerhalten.

2. Schutzvorrichtung (20) nach Anspruch 1, umfassend ferner eine Speichervorrichtung (22), die dazu konfiguriert ist, mindestens einen Temperaturgrenzwert zu speichern, der mindestens einem Ausgangswert des Batteriepacks (1) entspricht.

3. Schutzvorrichtung (20) nach Anspruch 2, wobei die Steuerung ferner dazu konfiguriert ist, den ersten Temperaturgrenzwert entsprechend dem Ausgangswert des Batteriepacks (1) auszuwählen.

4. Schutzvorrichtung (20) nach Anspruch 3, wobei, wenn der Batteriepack (1) einen ersten Ausgangswert ausgibt und der dem ersten Ausgangswert entsprechende Temperaturgrenzwert bereits in der Speichervorrichtung (22) gespeichert ist, die Steuerung ferner dazu konfiguriert ist, den dem ersten Ausgangswert entsprechenden Temperaturgrenzwert als ersten Temperaturgrenzwert zu verwenden.

5. Schutzvorrichtung (20) nach Anspruch 4, wobei:
wenn der Batteriepack (1) einen zweiten Ausgangswert ausgibt, der sich vom ersten Ausgangswert unterscheidet, und der dem zweiten Ausgangswert entsprechende Temperaturgrenzwert bereits in der Speichervorrichtung (22) gespeichert ist, die Steuerung ferner dazu konfiguriert ist, den dem zweiten Ausgangswert entsprechenden Temperaturgrenzwert als ersten Temperaturgrenzwert zu verwenden; und/oder
wenn der Batteriepack (1) einen dritten Ausgangswert ausgibt und der dem dritten Ausgangswert entsprechende Temperaturgrenzwert nicht in der Speichervorrichtung (22) gespeichert ist, die Steuerung ferner dazu konfiguriert ist, einen vorbestimmten Standardwert als ersten Temperaturgrenzwert zu verwenden.

6. Schutzvorrichtung (20) nach einem der Ansprüche 2 bis 5, wobei, wenn der Schutzvorgang durchgeführt wird, während sich der Batteriepack (1) entlädt, um einen ersten Ausgangswert auszugeben, und ein dem ersten Ausgangswert entsprechender Temperaturgrenzwert nicht in der Speichervorrichtung (22) gespeichert ist, die Steuerung ferner dazu konfiguriert ist, den ersten Temperaturgrenzwert in der Speichervorrichtung (22) als den dem ersten Ausgangswert entsprechenden Temperaturgrenzwert zu speichern.

7. Batteriepack (1), umfassend:
ein Batteriemodul (10); und
eine Schutzvorrichtung (20) nach einem der vorstehenden Ansprüche.

8. Schutzverfahren für einen Batteriepack (1), wobei das Verfahren Folgendes umfasst:
Messen eines ersten Temperaturwerts eines im Batteriepack (1) enthaltenen Batteriemoduls (10), während sich der Batteriepack (1) entlädt;
Durchführen eines Schutzvorgangs, der das Laden und Entladen des Batteriemoduls (10) des Batteriepacks (1) blockiert, wenn der erste Temperaturwert größer als ein erster Temperaturgrenzwert ist;
Messen eines zweiten Temperaturwerts des Batteriemoduls (10) nach Durchführung des Schutzvorgangs; und
Korrigieren des ersten Temperaturgrenzwerts entsprechend dem zweiten Temperaturwert,
wobei das Korrigieren des ersten Temperaturgrenzwerts Folgendes umfasst:
Korrigieren des ersten Temperaturgrenzwerts, so dass er um einen vorbestimmten Wert verringert wird, wenn der zweite Temperaturwert größer als ein maximal zulässiger Temperaturwert ist, und
Aufrechterhalten des ersten Temperaturgrenzwerts, wenn der zweite Temperaturwert kleiner oder gleich einem maximal zulässigen Temperaturwert ist.

9. Schutzverfahren nach Anspruch 8, umfassend ferner das Auswählen des ersten Temperaturgrenzwerts entsprechend einem Ausgangswert des Batteriepacks (1).

10. Schutzverfahren nach Anspruch 9, wobei das Auswählen des ersten Temperaturgrenzwerts das Auswählen eines bereits gespeicherten, einem ersten Ausgangswert entsprechenden Temperaturgrenzwerts als ersten Temperaturgrenzwert umfasst, wenn der Batteriepack (1) den ersten Ausgangswert ausgibt und ein dem ersten Ausgangswert entsprechender Temperaturgrenzwert bereits gespeichert ist.

11. Schutzverfahren nach Anspruch 10, wobei:
das Auswählen des ersten Temperaturgrenzwerts das Auswählen eines bereits gespeicherten, einem zweiten Ausgangswert entsprechenden Temperaturgrenzwerts als ersten Temperaturgrenzwert umfasst, wenn der Batteriepack (1) den zweiten Ausgangswert ausgibt, der sich vom ersten Ausgangswert unterscheidet, und ein dem zweiten Ausgangswert entsprechender Temperaturgrenzwert bereits gespeichert ist; und/oder
das Auswählen des ersten Temperaturgrenzwerts das Auswählen eines Standardwerts als ersten Temperaturgrenzwert umfasst, wenn der Batteriepack (1) einen dritten Ausgangswert ausgibt und ein dem dritten Ausgangswert entsprechender Temperaturgrenzwert nicht gespeichert ist.

12. Schutzverfahren nach einem der Ansprüche 8 bis 11, umfassend ferner das Registrieren des ersten Temperaturgrenzwerts als einen Temperaturgrenzwert, der einem ersten Ausgangswert entspricht, wenn der Schutzvorgang durchgeführt wird, während sich der Batteriepack (1) entlädt, um den ersten Ausgangswert auszugeben, und der dem ersten Ausgangswert entsprechende Temperaturgrenzwert nicht registriert ist.

## Revendications

1. Dispositif de protection (20) pour un bloc-batterie (1) incluant un module de batterie (10), le dispositif de protection (20) comportant :
un capteur de température (211) configuré pour mesurer une température du module de batterie (10) ; et
un dispositif de commande configuré pour réaliser une opération de protection qui bloque la charge et la décharge du module de batterie (10) du bloc-batterie (1) si une première valeur de température mesurée par le biais du capteur de température (211) pendant une utilisation du module de batterie (10) est supérieure à une première valeur limite de température et pour corriger la première valeur limite de température selon une deuxième valeur de température mesurée par le biais du capteur de température (211) après la réalisation de l'opération de protection ;
**caractérisé en ce que** :
si la deuxième valeur de température est supérieure à une valeur de température admissible maximale, le dispositif de commande est en outre configuré pour corriger la première valeur limite de température pour la réduire d'une valeur prédéterminée, et
si la deuxième valeur de température est inférieure ou égale à une valeur de température admissible maximale, le dispositif de commande est en outre configuré pour maintenir la première valeur limite de température.

2. Dispositif de protection (20) selon la revendication 1, comportant en outre un dispositif de stockage (22) configuré pour stocker au moins une valeur limite de température correspondant à au moins une valeur de sortie du bloc-batterie (1).

3. Dispositif de protection (20) selon la revendication 2, dans lequel le dispositif de commande est en outre configuré pour sélectionner la première valeur limite de température en fonction de la valeur de sortie du bloc-batterie (1).

4. Dispositif de protection (20) selon la revendication 3, dans lequel si le bloc-batterie (1) délivre une première valeur de sortie et que la valeur limite de température correspondant à la première valeur de sortie est déjà stockée dans le dispositif de stockage (22), le dispositif de commande est en outre configuré pour utiliser la valeur limite de température correspondant à la première valeur de sortie comme première valeur limite de température.

5. Dispositif de protection (20) selon la revendication 4, dans lequel :
si le bloc-batterie (1) délivre une deuxième valeur de sortie qui est différente de la première valeur de sortie et que la valeur limite de température correspondant à la deuxième valeur de sortie est déjà stockée dans le dispositif de stockage (22), le dispositif de commande est en outre configuré pour utiliser la valeur limite de température correspondant à la deuxième valeur de sortie comme première valeur limite de température ; et/ou
si le bloc-batterie (1) délivre une troisième valeur de sortie et que la valeur limite de température correspondant à la troisième valeur de sortie n'est pas stockée dans le dispositif de stockage (22), le dispositif de commande est en outre configuré pour utiliser une valeur par défaut prédéterminée comme première valeur limite de température.

6. Dispositif de protection (20) selon l'une quelconque des revendications 2 à 5, dans lequel si l'opération de protection est réalisée pendant que le bloc-batterie (1) se décharge pour délivrer une première valeur de sortie et qu'une valeur limite de température correspondant à la première valeur de sortie n'est pas stockée dans le dispositif de stockage (22), le dispositif de commande est en outre configuré pour stocker la première valeur limite de température dans le dispositif de stockage (22) en tant que valeur limite de température correspondant à la première valeur de sortie.

7. Bloc-batterie (1) comportant :
un module de batterie (10) ; et
un dispositif de protection (20) selon l'une quelconque des revendications précédentes.

8. Procédé de protection pour un bloc-batterie (1), le procédé comportant :
la mesure d'une première valeur de température d'un module de batterie (10) compris dans le bloc-batterie (1) pendant que le bloc-batterie (1) se décharge ;
la réalisation d'une opération de protection qui bloque la charge et la décharge du module de batterie (10) du bloc-batterie (1) si la première valeur de température est supérieure à une première valeur limite de température ;
la mesure d'une deuxième valeur de température du module de batterie (10) après la réalisation de l'opération de protection ; et
la correction de la première valeur limite de température en fonction de la deuxième valeur de température,
dans lequel la correction de la première valeur limite de température comprend :
la correction de la première valeur limite de température pour la réduire d'une valeur prédéterminée si la deuxième valeur de température est supérieure à une valeur de température admissible maximale, et
le maintien de la première valeur limite de température si la deuxième valeur de température est inférieure ou égale à une valeur de température admissible maximale.

9. Procédé de protection selon la revendication 8, comportant en outre la sélection de la première valeur limite de température selon une valeur de sortie du bloc-batterie (1).

10. Procédé de protection selon la revendication 9, dans lequel la sélection de la première valeur limite de température comprend la sélection d'une valeur limite de température déjà stockée correspondant à une première valeur de sortie comme première valeur limite de température si le bloc-batterie (1) délivre la première valeur de sortie et qu'une valeur limite de température correspondant à la première valeur de sortie est déjà stockée.

11. Procédé de protection selon la revendication 10, dans lequel :
la sélection de la première valeur limite de température comprend la sélection d'une valeur limite de température déjà stockée correspondant à une deuxième valeur de sortie comme première valeur limite de température si le bloc-batterie (1) délivre la deuxième valeur de sortie différente de la première valeur de sortie et qu'une valeur limite de température correspondant à la deuxième valeur de sortie est déjà stockée ; et/ou
la sélection de la première valeur limite de température comprend la sélection d'une valeur par défaut comme première valeur limite de température si le bloc-batterie (1) délivre une troisième valeur de sortie et qu'une valeur limite de température correspondant à la troisième valeur de sortie n'est pas stockée.

12. Procédé de protection selon l'une quelconque des revendications 8 à 11, comportant en outre l'enregistrement de la première valeur limite de température en tant que valeur limite de température correspondant à une première valeur de sortie si l'opération de protection est réalisée alors que le bloc-batterie (1) se décharge pour délivrer la première valeur de sortie et que la valeur limite de température correspondant à la première valeur de sortie n'est pas enregistrée.
